# EUROPEAN PATENT SPECIFICATION

(11) **EP 4 283 591 B1**
(45) Date of publication and mention of the grant of the patent: **16.09.2026**
(21) Application number: 23171408.0
(22) Date of filing: 03.05.2023
(51) Int. Cl.: G08G 1/00

(54) **DRIVING ASSISTANCE SYSTEM AND DRIVING ASSISTANCE METHOD**
FAHRASSISTENZSYSTEM UND FAHRASSISTENZVERFAHREN
SYSTÈME ET PROCÉDÉ D'AIDE À LA CONDUITE

(30) Priority: 26.05.2022 TW 111119618
(43) Date of publication of application: 29.11.2023
(73) Proprietor: Pegatron Corporation, Taipei City 112 (TW)
(72) Inventor: TSENG, Yu-Hung, Taipei City 112, Taiwan (TW); WU, Ping-Yao, Taipei City 112, Taiwan (TW); CHEN, Chia-Wei, Taipei City 112, Taiwan (TW)
(74) Representative: Haseltine Lake Kempner LLP

(56) References cited:
- CN-A- 102 136 195
- US-A1- 2007 290 886
- US-A1- 2014 278 052
- US-A1- 2017 341 653
- US-A1- 2020 320 313
- US-A1- 2021 035 443
- US-A1- 2021 118 294
- US-A1- 2021 319 691
- WEI LI ET AL: "Real-time Road Congestion Detection Based on Image Texture Analysis", PROCEDIA ENGINEERING, vol. 137, 31 December 2016 (2016-12-31), pages 196 - 201, XP029419871, ISSN: 1877-7058, DOI: 10.1016/J.PROENG.2016.01.250

## Description

### BACKGROUND

### Technology Field

The disclosure relates to a driving assistance system and a driving assistance method, and particularly relates to a driving assistance system and a driving assistance method for navigating a vehicle according to actual road conditions.

### Description of Related Art

Current driving assistance systems for vehicles may be divided into semi-automatic driving systems (for example, level 2, level 3 driving systems) and automatic driving systems (for example, a level 4 driving system). Regarding the semi-automatic driving system, when the vehicle changes to a target lane, a driver still needs to visually observe a congestion situation of the target lane to determine whether the vehicle may be switched from a current lane to the target lane.

The automatic driving system may control the self-driving vehicle to drive from the current lane to the target lane by itself. However, the automatic driving system may not be able to control the self-driving vehicle to change lanes smoothly because the target lane is too congested, thus missing the originally planned short route and leading to re-plan a longer route.

It may be seen that regardless of the type of the driving assistance system, the congestion condition of the target lane will affect a lane changing result of the vehicle. Thus, how to provide a message to instruct the vehicle to change from the current lane to the target lane as early as possible according to the congestion condition of the target lane is one of the research focuses of those skilled in the art.

US 2021/035443 A1 discloses a system that determines lane occupancy from vehicle quantity and lane capacity derived from image-based object detection and/or sensor measurements.

US 2021/118294 A1 discloses systems and methods that provide vehicles with individually customized information and real-time control instructions for vehicles to fulfill the driving tasks such as car following, lane changing, and route guidance.

US 2021/319691 A1 discloses systems and techniques which include an infrastructure-based solution to mitigate phantom traffic jams efficiently by leveraging on the road-side sensors, a multi-access edge computing (MEC) platform, and vehicle-to-everything (V2X) communications.

CN 102 136 195 A and WEI LI ET AL: "Real-time Road Congestion Detection Based on Image Texture Analysis" disclose a method for detecting road traffic conditions (clear / saturated / congested) using image texture analysis.

### SUMMARY

The disclosure is directed to a driving assistance system and a driving assistance method for navigating a vehicle according to a congestion condition of a target lane.

The disclosure provides a driving assistance system for navigating a vehicle in accordance with appended claim 1.

The disclosure provides a driving assistance method for navigating a vehicle in accordance with appended claim 7.

Based on the above description, the driving assistance system and the driving assistance method of the disclosure calculate multiple congestion levels corresponding to the road sections according to the regional images and provide the lane changing message to the vehicle according to the congestion levels. In this way, according to the lane changing message, the vehicle is adapted to be driven from the current lane to the target lane on a road section with less serious congestion.

To make the aforementioned more comprehensible, several embodiments accompanied with drawings are described in detail as follows.

### BRIEF DESCRIPTION OF THE DRAWINGS

FIG. 1 is a schematic diagram of an operational scenario of a driving assistance system according to an embodiment of the disclosure.
FIG. 2 is a flowchart of a driving assistance method according to an embodiment of the disclosure.
FIG. 3 is a schematic diagram of a driving assistance system according to an embodiment of the disclosure.
FIG. 4 is a schematic diagram of a calculator according to an embodiment of the disclosure.

### DESCRIPTION OF THE EMBODIMENTS

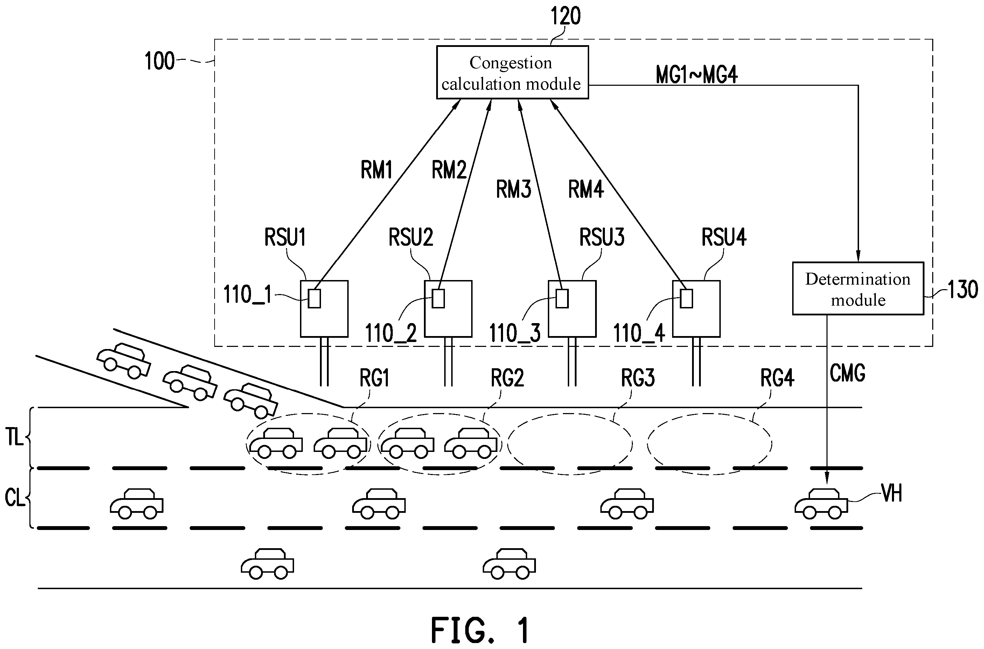

Referring to FIG. 1, FIG. 1 is a schematic diagram of an operational scenario of a driving assistance system according to an embodiment of the disclosure. In the embodiment, a driving assistance system 100 is used for navigating a vehicle VH. The driving assistance system 100 includes image capturing devices 110_1-110_4, a congestion calculation module 120 and a determination module 130. The image capturing devices 110_1-110_4 capture regional images RM1-RM4 of road sections RG1-RG4 of a target lane TL. For example, the target lane TL is an exit lane of an expressway or a highway. The image capture device 110_1 is installed at various roadside locations. A distance between one and another roadside location is tens to hundreds meters. For example, the image capturing device 110_1 captures the regional image RM1 of the road section RG1, the image capturing device 110_2 captures the regional image RM2 of the road section RG2, the image capturing device 110_3 captures the regional image RM3 of the road section RG3, and the image capturing device 110_4 captures the regional image RM4 of the road section RG4.

In the embodiment, the congestion calculation module 120 communicates with the image capturing devices 110_1-110_4 to receive the regional images RM1-RM4 from the image capturing devices 110_1-110_4. The congestion calculation module 120 calculates congestion levels MG1-MG4 corresponding to the road sections RG1-RG4 according to the regional images RM1-RM4. The determination module 130 communicates with the congestion calculation module 120 to receive the congestion levels MG1-MG4 from the congestion calculation module 120. The determination module 130 provides a lane changing message CMG to the vehicle VH according to the congestion levels MG1-MG4.

It should be noted that the driving assistance system 100 receives the regional images RM1-RM4 of the road sections RG1-RG4 of the target lane TL. The driving assistance system 100 calculates the congestion levels MG1-MG4 corresponding to the road sections RG1-RG4 according to the regional images RM1-RM4 and provides the lane changing message CMG to the vehicle VH according to the congestion levels MG1- MG4. Namely, the lane changing message CMG received by the vehicle VH is related to actual congestion conditions of the road sections RG1-RG4 of the target lane TL. The driving assistance system 100 may provide the lane changing message CMG to the vehicle VH according to the congestion conditions of the target lane TL, so that the vehicle VH may be driven from a current lane CL to the target lane TL as early as possible. In this way, based on the lane changing message CMG, the vehicle VH may travel from the current lane CL to the target lane TL on a road section with less serious congestion, thereby improving driving safety.

Taking the embodiment as an example, the congestion calculation module 120 calculates the congestion level MG1 corresponding to the road section RG1 according to the regional image RM1; the congestion calculation module 120 calculates the congestion level MG2 corresponding to the road section RG2 according to the regional image RM2; and the congestion calculation module 120 calculates the congestion level MG3 corresponding to the road section RG3 according to the regional image RM3. In addition, the congestion calculation module 120 further calculates the congestion level MG4 corresponding to the road section RG4 according to the regional image RM4. In the embodiment of the disclosure, the road sections RG1 and RG2 are congested with traffic while road sections RG3 and RG4 are not congested with traffic. The determination module 130 provides the lane changing message CMG to the vehicle VH in response to the congestion levels MG1-MG4. Thus, the vehicle VH may travel from the current lane CL to the target lane TL on one of the road sections RG3 and RG4 as early as possible according to the lane changing message CMG.

In the embodiment, the image capturing devices 110_1-110_4 may be installed at respective roadside facilities (RSU) RSU1-RSU4. For example, the image capturing device 110_1 is installed at the roadside facility RSU1; the image capturing device 110_2 is installed at the roadside facility RSU2, and so on. The roadside facilities RSU1-RSU4 are, for example, street lamps, traffic lights, arbitrary road signs and traffic signals installed on the road side. The image capturing devices 110_1-110_4 are, for example, implemented by cameras or video cameras.

In the embodiment, the driving assistance system 100 is exemplified by four image capturing devices 110_1-110_4. However, the number of the image capturing devices of the disclosure is not limited to the embodiment. The number of the image capturing devices of the disclosure may be plural. The number of the image capturing devices of the disclosure may be designed based on practical usage requirements.

In the embodiment, the congestion calculation module 120 may be arranged outside the roadside facilities and the determination module 130. The congestion calculation module 120 and the determination module 130 include, for example, at least one central processing unit (CPU), or at least one programmable general-purpose or special-purpose microprocessor, at least one digital signal processor (DSP), at least one programmable controller, at least one application specific integrated circuit (ASIC), at least one programmable logic device (PLD) or other similar devices or a combination of these devices, which may load and execute computer programs.

In some embodiments, the congestion calculation module 120 may be a first server or a first host. The determination module 130 may be a second server or a second host.

In some embodiments, the congestion calculation module 120 may be disposed inside at least one of the roadside facilities RSU1 - RSU4.

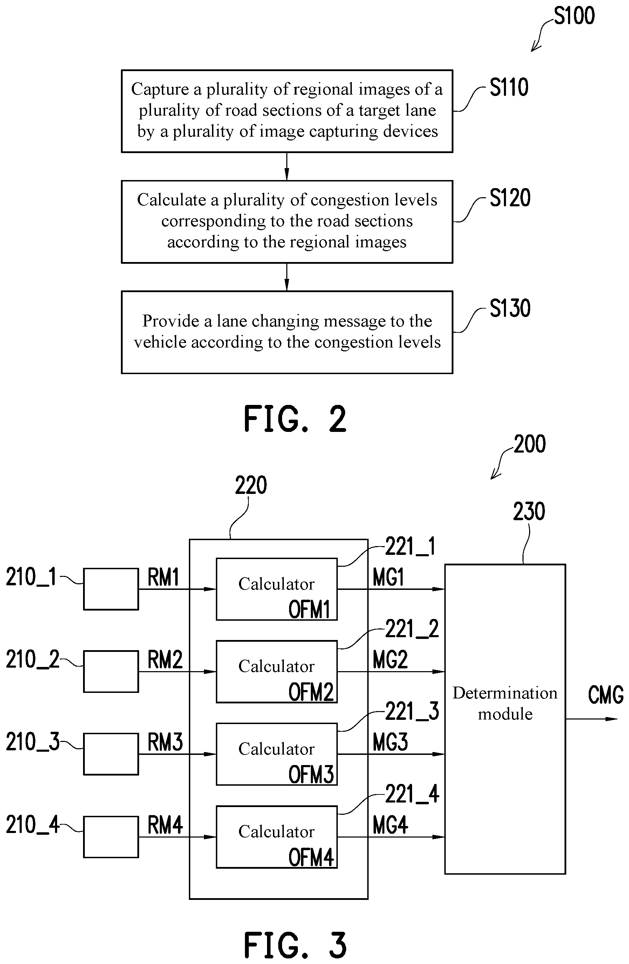

Referring to FIG. 1 and FIG. 2 together, FIG. 2 is a flowchart of a driving assistance method according to an embodiment of the disclosure. In the embodiment, a driving assistance method S100 is used for navigating the vehicle VH. The driving assistance method S100 is adapted to the driving assistance system 100. The driving assistance method S100 includes steps S110-S130. In step S110, the image capturing devices 110_1-110_4 capture the regional images RM1-RM4 of the road sections RG1-RG4 of the target lane TL. In step S120, the congestion levels MG1-MG4 corresponding to the road sections RG1-RG4 are calculated according to the regional images RM1-RM4. In step S130, the lane changing message CMG is provided to the vehicle VH according to the congestion levels MG1-MG4. In the embodiment, regarding implementation details of steps S110-S130, sufficient teachings may be learned from the embodiment of FIG. 1, so that details thereof are not repeated.

Referring to FIG. 1 and FIG. 3 together, FIG. 3 is a schematic diagram of a driving assistance system according to an embodiment of the disclosure. In the embodiment, a driving assistance system 200 includes image capturing devices 210_1-210_4, a congestion calculation module 220 and a determination module 230. The image capturing devices 210_1-210_4 capture the regional images RM1-RM4 of the road sections RG1-RG4 of the target lane TL. The configuration method and implementation details of the image capturing devices 210_1-210_4 are similar to the configuration method and implementation details of the image capturing devices 110_1-110_4 in FIG. 1, and details thereof are not repeated here.

In the embodiment, the congestion calculation module 220 generates optical flow information OFM1-OFM4 according to the regional images RM1-RM4. The optical flow information OFM1 corresponds to the regional image RM1; the optical flow information OFM2 corresponds to the regional image RM2; the optical flow information OFM3 corresponds to the regional image RM3; the optical flow information OFM4 corresponds to the regional image RM4. The congestion calculation module 220 calculates the congestion levels MG1-MG4 according to the regional images RM1-RM4 and the optical flow information OFM1-OFM4.

In the embodiment, the congestion calculation module 220 includes calculators 221_1-221_4. The calculators 221_1-221_4 are coupled to the image capturing devices 210_1-210_4, respectively. Taking the embodiment as an example, the calculator 221_1 is coupled to the image capturing device 210_1; the calculator 221_2 is coupled to the image capturing device 210_2, and so on. The calculator 221_1 receives the regional image RM1, generates the optical flow information OFM1 according to the regional image RM1, and calculates the congestion level MG1 according to the regional image RM1 and the optical flow information OFM1; the calculator 221_2 receives the regional image RM2, generates the optical flow information OFM2 according to the regional image RM2, and calculates the congestion level MG2 according to the regional image RM2 and the optical flow information OFM2, and so on.

The calculator 221_1 determines the number of vehicles on the road section RG1 of the target lane TL according to a texture of the regional image RM1 and determines a traffic speed on the road section RG1 of the target lane TL according to the optical flow information OFM1. The calculator 221_1 also calculates a congestion value of the congestion level MG1 according to complexity of the texture of the regional image RM1 and an optical flux of the optical flow information OFM1. The calculator 221_2 determines the number of vehicles on the road section RG2 of the target lane TL according to a texture of the regional image RM2 and determines a traffic speed on the road section RG2 of the target lane TL according to the optical flow information OFM2. The calculator 221_2 also calculates a congestion value of the congestion level MG2 according to complexity of the texture of the regional image RM2 and an optical flux of the optical flow information OFM2, and so on.

The complexities of the textures of the road sections RG1-RG4 are positively correlated with the number of vehicles on the corresponding road sections of the target lane TL. The optical flux is positively correlated with the traffic speed on the corresponding road section of the target lane TL. Thus, the higher the complexity of the texture and the lower the optical flux are, the higher the corresponding congestion level is. On the other hand, the lower the complexity of the texture and the higher the optical flux are, the lower the corresponding congestion level is.

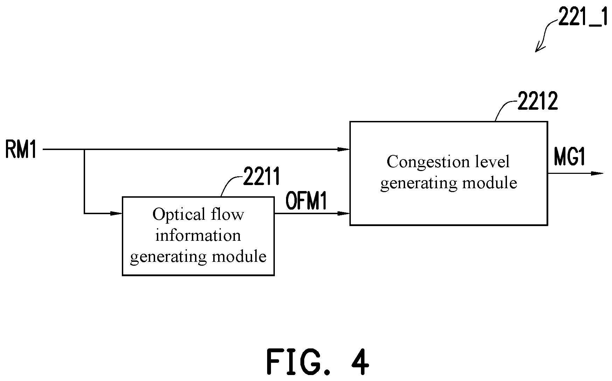

For further description, referring to FIG. 3 and FIG. 4 together, FIG. 4 is a schematic diagram of a calculator according to an embodiment of the disclosure. In the embodiment, the calculator 221_1 includes an optical flow information generating module 2211 and a congestion level generating module 2212. The optical flow information generating module 2211 receives the regional image RM1, and calculates the optical flow information OFM1 according to the regional image RM1.

For example, the optical flow information generating module 2211 may capture multiple latest frames of the regional image RM1 (for example, the latest 90 frames in the regional image RM1, which is not limited by the disclosure). The optical flow information generating module 2211 uses the multiple frames to calculate the optical flow information OFM1 corresponding to the multiple frames. The optical flow information generating module may be a conversion circuit or software for converting the regional image RM1 into the optical flow information OFM1.

The congestion level generating module 2212 is coupled to the optical flow information generating module 2211. The congestion level generating module 2212 receives the regional image RM1 and the optical flow information OFM1. The congestion level generating module 2212 includes, for example, a deep learning model or a neural network. The deep learning model is, for example, a classification model (such as AlextNet, Googlenet, Resnet, Mobilenet, etc.) or an object detection model (such as Mask RCNN, SSD, Yolo4, Yolo5, etc.).

The congestion level generating module 2212 captures the texture of the regional image RM1 to identify the number of vehicles on the road section RG1 of the target lane TL. The texture of the regional image RM1 is associated with outlines and colours of the vehicles on the road section RG1. Thus, the simpler the texture of the regional image RM1 is, the less vehicles are determined on the road section RG1 by the congestion level generating module 2212. The more complex the texture of the regional image RM1 is, the more vehicles are determined on the road section RG1 by the congestion level generating module 2212.

The optical flux of the optical flow information OFM1 is associated with moving speeds of the vehicles on the road section RG1. Thus, the smaller the optical flux of the optical flow information OFM1 is, the slower the traffic speed on the road section RG1 is determined by the congestion level generating module 2212. The greater the optical flux of the optical flow information OFM1 is, the faster the traffic speed on the road section RG1 is determined by the congestion level generating module 2212. In detail, the congestion level generating module 2212 calculates the congestion value associated with the congestion level MG1 of the road section RG1 according to the complexity of the texture and the optical flux of the optical flow information OFM1. The congestion value is, for example, a percentage value (for example, 0%-100%). The greater the congestion value is, the more severe the congestion level on the road section RG1 is.

In an embodiment, the congestion level generating module 2212 may extract multiple features of the regional image RM1 and the optical flow information OFM1 through a convolution network, feed the multiple features into the Fully Connected Layer for classification, and perform Loss Function operation to obtain the congestion value.

Referring back to the embodiment shown in FIG. 1 and FIG. 3, taking the calculator 221_1 as an example, the calculator 221_1 and the image capturing device 210_1 may be set in the roadside facility RSU1. In some embodiments, the calculator 221_1 may be disposed in the image capturing device 210_1.

In the embodiment, the determination module 230 receives the congestion levels MG1-MG4. The determination module 230 provides the lane changing message CMG according to multiple congestion values of the congestion levels MG1-MG4. The determination module 230 may identify current congestion levels of the road sections RG1-RG4 according to the congestion values of the congestion levels MG1-MG4 and provide the lane changing message CMG accordingly. The determination module 230 determines the congestion values of the congestion levels MG1-MG4 based on a threshold. For example, the threshold is set at 40%. The congestion value of the congestion level MG1 is 90%. The congestion value of the congestion level MG2 is 85%. The congestion value of the congestion level MG3 is 10%. The congestion value of the congestion level MG4 is 10%. The congestion values of the congestion levels MG1 and MG2 are both higher than the threshold. The congestion values of the congestion levels MG3 and MG4 are both lower than the threshold. Thus, the lane changing message CMG provided by the determination module 230 may inform the vehicle VH of switching to the target lane TL on the road sections RG3 and RG4.

In some embodiments, the determination module 230 also determines a designated non-congested road section that is closest to a congested road section for the vehicle VH based on the congestion levels MG1~MG4, and notifies the vehicle VH of switching to the target lane TL at the designated non-congested road section. For example, the congestion values of the congestion levels MG1 and MG2 are both higher than the threshold. The congestion values of the congestion levels MG3 and MG4 are both lower than the threshold. Thus, the determination module 230 determines that the road sections RG1, RG2 are congested road sections, and the road sections RG3, RG4 are non-congested road sections. The determination module 230 designate the road section RG3 as a non-congested road section, and notify the vehicle VH of switching to the target lane TL on the road section RG3.

The determination module 230 includes, for example, a deep learning model or a neural network. The deep learning model is, for example, a classification model (such as AlextNet, Googlenet, Resnet, Mobilenet, etc.) or an object detection model (such as Mask RCNN, SSD, Yolo4, Yolo5, etc.).

It should be noted that the driving assistance systems 100 and 200 may be adapted to lane changing decisions supporting driving navigation software, Level 2 driving assistance systems, Level 3 semi-automatic driving systems, and self-driving systems. The driving assistance systems 100 and 200 notify the vehicle VH of switching to the target lane TL on a non-congested road section through the lane changing message CMG according to the actual congestion situation on the road sections RG1-RG4 of the target lane TL. In this way, the vehicle VH does not miss an original driving route.

In summary, the driving assistance system and the driving assistance method of the disclosure calculate multiple congestion levels corresponding to the road sections according to the regional images and provide the lane changing message to the vehicle according to the congestion levels. According to the lane changing message, the vehicle may travel from the current lane to the target lane on a road section with less serious congestion. In this way, the vehicle does not miss the original driving route due to the congestion of the road section.

## Claims

1. A driving assistance system (100, 200) for navigating a vehicle (VH) comprising:
a plurality of image capturing devices (110_1~110_4, 210_1~210_4), configured to capture a plurality of regional images (RM1~RM4) of a plurality of road sections (RG1~RG4) of a target lane (TL), wherein the target lane (TL) is an exit lane of an expressway or a highway;
a congestion calculation module (120, 220), configured to receive the regional images (RM1~RM4) from the image capturing devices (110_1~110_4, 210_1~210_4) and calculate a plurality of congestion levels (MG1~MG4) corresponding to the road sections (RG1~RG4) according to the regional images (RM1~RM4); and
a determination module (130, 230), configured to receive the congestion levels (MG1~MG4) from the congestion calculation module (120, 220) and provide a lane changing message (CMG) to the vehicle (VH) according to the congestion levels (MG1~MG4),
wherein the congestion calculation module (120, 220) comprises a plurality of calculators (221_1~221_4), coupled to the respective image capturing devices (110_1~110_4, 210_1~210_4),
wherein each of the calculators (221_1~221_4) generates a corresponding optical flow information (OFM1~OFM4) according to a corresponding regional image among the regional images (RM1~RM4) and calculates a corresponding congestion level according to the corresponding regional image and the corresponding optical flow information (OFM1~OFM4), and
wherein each of the calculators (221_1~221_4) determines the number of vehicles on a corresponding road section of the target lane (TL) according to a texture of the corresponding regional image, determines a traffic speed on the corresponding road section of the target lane (TL) according to the corresponding optical flow information (OFM1~OFM4), and calculates a congestion value of the corresponding congestion level according to complexity of the texture and an optical flux of the corresponding optical flow information (OFM1~OFM4).

2. The driving assistance system (100, 200) according to claim 1, wherein the image capturing devices (110_1~110_4, 210_1~210_4) are disposed at a plurality of different roadside facilities.

3. The driving assistance system (100, 200) according to claim 1 or 2, wherein the congestion calculation module (120, 220) generates a plurality of optical flow information (OFM1~OFM4) corresponding to the regional images (RM1~RM4) and calculates the congestion levels (MG1~MG4) according to the regional images (RM1~RM4) and the optical flow information (OFM1~OFM4).

4. The driving assistance system (100, 200) according to claim 1, wherein
the complexity of the texture is positively correlated with the number of vehicles on the corresponding road section of the target lane (TL), and
the optical flux is positively correlated with the traffic speed on the corresponding road section of the target lane (TL).

5. The driving assistance system (100, 200) according to claim 4, wherein the higher the complexity of the texture and the lower the optical flux are, the higher the congestion value gets.

6. The driving assistance system (100, 200) according to claim 1, 2 or 3, wherein in response to at least one congestion value of the congestion values lower than a threshold, the determination module (130, 230) provides the lane changing message (CMG) to notify the vehicle (VH) of switching to the target lane (TL) on the road section corresponding to the at least one congestion value.

7. A driving assistance method (S100) for navigating a vehicle (VH) and comprising:
capturing a plurality of regional images (RM1~RM4) of a plurality of road sections (RG1~RG4) of a target lane (TL) by a plurality of image capturing devices (110_1~110_4, 210_1~210_4), wherein the target lane (TL) is an exit lane of an expressway or a highway;
calculating a plurality of congestion levels (MG1~MG4) corresponding to the road sections (RG1~RG4) according to the regional images (RM1~RM4); and
providing a lane changing message (CMG) to the vehicle (VH) according to the congestion levels (MG1~MG4),
wherein a congestion calculation module (120, 220) comprises a plurality of calculators (221_1~221_4), wherein each of the calculators (221_1~221_4) is coupled to a corresponding image capturing device among the image capturing devices (110_1~110_4, 210_1~210_4), and
wherein the step of calculating the congestion levels (MG1~MG4) corresponding to the road sections (RG1~RG4) according to the regional images (RM1~RM4) comprises:
generating a corresponding optical flow information (OFM1~OFM4) according to a corresponding regional image among the regional images (RM1~RM4) by each of the calculators (221_1~221_4), and calculating a corresponding congestion level according to the corresponding regional image and the corresponding optical flow information (OFM1~OFM4), and
wherein the step of calculating the corresponding congestion level according to the corresponding regional image and the corresponding optical flow information (OFM1~OFM4) comprises:
determining the number of vehicles on a corresponding road section of the target lane (TL) according to a texture of the corresponding regional image;
determining a traffic speed on the corresponding road section of the target lane (TL) according to the corresponding optical flow information (OFM1~OFM4); and
calculating a congestion value of the corresponding congestion level according to complexity of the texture and an optical flux of the corresponding optical flow information (OFM1~OFM4).

8. The driving assistance method (S100) according to claim 7, wherein the step of calculating the congestion levels (MG1~MG4) corresponding to the road sections (RG1~RG4) according to the regional images (RM1~RM4) comprises:
generating a plurality of optical flow information (OFM1~OFM4) corresponding to the regional images (RM1~RM4) according to the regional images (RM1~RM4); and
calculating the congestion levels (MG1~MG4) according to the regional images (RM1~RM4) and the optical flow information (OFM1~OFM4).

9. The driving assistance method (S100) according to claim 7, wherein
the complexity of the texture is positively correlated with the number of vehicles on the corresponding road section of the target lane (TL), and
the optical flux is positively correlated with the traffic speed on the corresponding road section of the target lane (TL).

10. The driving assistance method (S100) according to claim 9, wherein the higher the complexity of the texture and the lower the optical flux are, the higher the congestion value gets.

11. The driving assistance method (S100) according to claim 7, wherein the step of providing the lane changing message (CMG) to the vehicle (VH) according to the congestion levels (MG1~MG4) comprises:
in response to at least one congestion value of the congestion values lower than a threshold, providing the lane changing message (CMG) to notify the vehicle (VH) of switching to the target lane (TL) on the road section corresponding to the at least one congestion value.

## Patentansprüche

1. Fahrassistenzsystem (100, 200) zum Navigieren eines Fahrzeugs (VH), umfassend:
eine Vielzahl von Bilderfassungsvorrichtungen (110_1~110_4, 210_1~210_4), konfiguriert zum Erfassen einer Vielzahl von Regionalbildern (RM1~RM4) einer Vielzahl von Straßenabschnitten (RG1~RG4) einer Zielspur (TL), wobei die Zielspur (TL) eine Ausfahrtsspur einer Schnellstraße oder einer Autobahn ist;
ein Stauberechnungsmodul (120, 220), konfiguriert zum Empfangen der Regionalbilder (RM1~RM4) von den Bilderfassungsvorrichtungen (110_1~110_4, 210_1~210_4) und Berechnen einer Vielzahl von Staugraden (MG1~MG4), die den Straßenabschnitten (RG1~RG4) entsprechen, gemäß den Regionalbildern (RM1~RM4); und
ein Bestimmungsmodul (130, 230), konfiguriert zum Empfangen der Staugrade (MG1~MG4) von dem Stauberechnungsmodul (120, 220) und Bereitstellen einer Spurwechselnachricht (CMG) an das Fahrzeug (VH) gemäß den Staugraden (MG1~MG4),
wobei das Stauberechnungsmodul (120, 220) eine Vielzahl von Rechnern (221_1-221_4) umfasst, die mit den jeweiligen Bilderfassungsvorrichtungen (110_1~110_4, 210_1~210_4) gekoppelt sind,
wobei jeder der Rechner (221_1~221_4) entsprechende Optische-Fluss-Informationen (OFM1~OFM4) gemäß einem entsprechenden Regionalbild unter den Regionalbildern (RM1~RM4) erzeugt und einen entsprechenden Staugrad gemäß dem entsprechenden Regionalbild und den entsprechenden Optische-Fluss-Informationen (OFM1~OFM4) berechnet, und
wobei jeder der Rechner (221_1-221_4) die Fahrzeuganzahl auf einem entsprechenden Straßenabschnitt der Zielspur (TL) gemäß einer Textur des entsprechenden Regionalbildes bestimmt, eine Verkehrsgeschwindigkeit auf dem entsprechenden Straßenabschnitt der Zielspur (TL) gemäß den entsprechenden Optische-Fluss-Informationen (OFM1~OFM4) bestimmt und einen Stauwert des entsprechenden Staugrades gemäß der Komplexität der Textur und einem optischen Fluss der entsprechenden Optische-Fluss-Informationen (OFM1~OFM4) berechnet.

2. Fahrassistenzsystem (100, 200) nach Anspruch 1, wobei die Bilderfassungsvorrichtungen (110_1~110_4, 210_1~210_4) an einer Vielzahl von verschiedenen straßenseitigen Einrichtungen angeordnet sind.

3. Fahrassistenzsystem (100, 200) nach Anspruch 1 oder 2, wobei das Stauberechnungsmodul (120, 220) eine Vielzahl von Optische-Fluss-Informationen (OFM1~OFM4), die den Regionalbildern (RM1~RM4) entsprechen, erzeugt und die Staugrade (MG1~MG4) gemäß den Regionalbildern (RM1~RM4) und den Optische-Fluss-Informationen (OFM1~OFM4) berechnet.

4. Fahrassistenzsystem (100, 200) nach Anspruch 1, wobei die Komplexität der Textur mit der Fahrzeuganzahl auf dem entsprechenden Straßenabschnitt der Zielspur (TL) positiv korreliert ist, und
der optische Fluss mit der Verkehrsgeschwindigkeit auf dem entsprechenden Straßenabschnitt der Zielspur (TL) positiv korreliert ist.

5. Fahrassistenzsystem (100, 200) nach Anspruch 4, wobei, je höher die Komplexität der Textur und je niedriger der optische Fluss sind, desto höher der Stauwert wird.

6. Fahrassistenzsystem (100, 200) nach Anspruch 1, 2 oder 3, wobei als Reaktion darauf, dass mindestens ein Stauwert der Stauwerte niedriger als ein Schwellenwert ist, das Bestimmungsmodul (130, 230) die Spurwechselnachricht (CMG) bereitstellt, um das Fahrzeug (VH) über Umschalten auf die Zielspur (TL) auf dem Straßenabschnitt, der dem mindestens einen Stauwert entspricht, zu benachrichtigen.

7. Fahrassistenzverfahren (S100) zum Navigieren eines Fahrzeugs (VH) und umfassend:
Erfassen einer Vielzahl von Regionalbildern (RM1~RM4) einer Vielzahl von Straßenabschnitten (RG1~RG4) einer Zielspur (TL) durch eine Vielzahl von Bilderfassungsvorrichtungen (110_1~110_4, 210_1~210_4), wobei die Zielspur (TL) eine Ausfahrtsspur einer Schnellstraße oder einer Autobahn ist;
Berechnen einer Vielzahl von Staugraden (MG1~MG4), die den Straßenabschnitten (RG1~RG4) entsprechen, gemäß den Regionalbildern (RM1~RM4); und
Bereitstellen einer Spurwechselnachricht (CMG) an das Fahrzeug (VH) gemäß den Staugraden (MG1~MG4),
wobei ein Stauberechnungsmodul (120, 220) eine Vielzahl von Rechnern (221_1-221_4) umfasst, wobei jeder der Rechner (221_1~221_4) mit einer entsprechenden Bilderfassungsvorrichtung unter den Bilderfassungsvorrichtungen (110_1~110_4, 210_1~210_4) gekoppelt ist, und
wobei der Schritt des Berechnens der Staugrade (MG1~MG4), die den Straßenabschnitten (RG1~RG4) entsprechen, gemäß den Regionalbildern (RM1~RM4) umfasst:
Erzeugen entsprechender Optische-Fluss-Informationen (OFM1~OFM4) gemäß einem entsprechenden Regionalbild unter den Regionalbildern (RM1~RM4) durch jeden der Rechner (221_1~221_4), und Berechnen eines entsprechenden Staugrades gemäß dem entsprechenden Regionalbild und den entsprechenden Optische-Fluss-Informationen (OFM1~OFM4), und
wobei der Schritt des Berechnens des entsprechenden Staugrades gemäß dem entsprechenden Regionalbild und den entsprechenden Optische-Fluss-Informationen (OFM1~OFM4) umfasst:
Bestimmen der Fahrzeuganzahl auf einem entsprechenden Straßenabschnitt der Zielspur (TL) gemäß einer Textur des entsprechenden Regionalbildes;
Bestimmen einer Verkehrsgeschwindigkeit auf dem entsprechenden Straßenabschnitt der Zielspur (TL) gemäß den entsprechenden Optische-Fluss-Informationen (OFM1~OFM4); und
Berechnen eines Stauwertes des entsprechenden Staugrades gemäß der Komplexität der Textur und einem optischen Fluss der entsprechenden Optische-Fluss-Informationen (OFMl~OFM4).

8. Fahrassistenzverfahren (S100) nach Anspruch 7, wobei der Schritt des Berechnens der Staugrade (MG1~MG4), die den Straßenabschnitten (RG1~RG4) entsprechen, gemäß den Regionalbildern (RM1~RM4) umfasst:
Erzeugen einer Vielzahl von Optische-Fluss-Informationen (OFM1~OFM4), die den Regionalbildern (RM1~RM4) entsprechen, gemäß den Regionalbildern (RM1~RM4); und
Berechnen der Staugrade (MG1~MG4) gemäß den Regionalbildern (RM1~RM4) und den Optische-Fluss-Informationen (OFM1~OFM4).

9. Fahrassistenzverfahren (S100) nach Anspruch 7, wobei
die Komplexität der Textur mit der Fahrzeuganzahl auf dem entsprechenden Straßenabschnitt der Zielspur (TL) positiv korreliert ist, und
der optische Fluss mit der Verkehrsgeschwindigkeit auf dem entsprechenden Straßenabschnitt der Zielspur (TL) positiv korreliert ist.

10. Fahrassistenzverfahren (S100) nach Anspruch 9, wobei, je höher die Komplexität der Textur und je niedriger der optische Fluss sind, desto höher der Stauwert wird.

11. Fahrassistenzverfahren (S100) nach Anspruch 7, wobei der Schritt des Bereitstellens der Spurwechselnachricht (CMG) an das Fahrzeug (VH) gemäß den Staugraden (MG1~MG4) umfasst:
als Reaktion darauf, dass mindestens ein Stauwert der Stauwerte niedriger als ein Schwellenwert ist, Bereitstellen der Spurwechselnachricht (CMG), um das Fahrzeug (VH) über Umschalten auf die Zielspur (TL) auf dem Straßenabschnitt, der dem mindestens einen Stauwert entspricht, zu benachrichtigen.

## Revendications

1. Dispositif d'aide à la conduite (100, 200) pour la navigation d'un véhicule (VH) comprenant :
une pluralité de dispositifs de capture d'images (110_1~110_4, 210_1~210_4), configurés pour capturer une pluralité d'images régionales (RM1~RM4) d'une pluralité de sections de route (RG1~RG4) d'une voie cible (TL), dans lequel la voie cible (TL) est une voie de sortie d'une autoroute ou d'une voie rapide ; un module de calcul de congestion (120, 220), configuré pour recevoir les images régionales (RM1~RM4) à partir des dispositifs de capture d'images (110_1~110_4, 210_1~210_4) et calculer une pluralité de niveaux de congestion (MG1~MG4) correspondant aux sections de route (RG1~RG4) selon les images régionales (RM1~RM4) ; et
un module de détermination (130, 230), configuré pour recevoir les niveaux de congestion (MG1~MG4) à partir du module de calcul de congestion (120, 220) et fournir un message de changement de voie (CMG) au véhicule (VH) selon les niveaux de congestion (MG1~MG4),
dans lequel le module de calcul de congestion (120, 220) comprend une pluralité de calculateurs (221_1~221_4), couplés aux dispositifs de capture d'images respectifs (110_1~110_4, 210_1~210_4),
dans lequel chacun des calculateurs (221_1~221_4) génère des informations de flux optique correspondantes (OFM1~OFM4) selon une image régionale correspondante parmi les images régionales (RM1~RM4) et calcule un niveau de congestion correspondant selon l'image régionale correspondante et les informations de flux optique correspondantes (OFM1~OFM4), et
dans lequel chacun des calculateurs (221_1~221_4) détermine le nombre de véhicules sur une section de route correspondante de la voie cible (TL) selon une texture de l'image régionale correspondante, détermine une vitesse de circulation sur la section de route correspondante de la voie cible (TL) selon les informations de flux optique correspondantes (OFM1~OFM4), et calcule une valeur de congestion du niveau de congestion correspondant selon la complexité de la texture et un flux optique des informations de flux optique correspondantes (OFM1~OFM4).

2. Système d'aide à la conduite (100, 200) selon la revendication 1, dans lequel les dispositifs de capture d'images (110_1~110_4, 210_1~210_4) sont disposés au niveau d'une pluralité d'installations routières différentes.

3. Système d'aide à la conduite (100, 200) selon la revendication 1 ou 2, dans lequel le module de calcul de congestion (120, 220) génère une pluralité d'informations de flux optique (OFM1~OFM4) correspondant aux images régionales (RM1~RM4) et calcule les niveaux de congestion (MG1~MG4) selon les images régionales (RM1~RM4) et les informations de flux optique (OFM1~OFM4).

4. Système d'aide à la conduite (100, 200) selon la revendication 1, dans lequel
la complexité de la texture est positivement corrélée au nombre de véhicules sur la section de route correspondante de la voie cible (TL), et
le flux optique est positivement corrélé à la vitesse de circulation sur la section de route correspondante de la voie cible (TL).

5. Système d'aide à la conduite (100, 200) selon la revendication 4, dans lequel plus la complexité de la texture est élevée et plus le flux optique est faible, plus la valeur de congestion est élevée.

6. Système d'aide à la conduite (100, 200) selon la revendication 1, 2 ou 3, dans lequel, en réponse à au moins une valeur de congestion des valeurs de congestion inférieure à un seuil, le module de détermination (130, 230) fournit le message de changement de voie (CMG) pour informer le véhicule (VH) du passage à la voie cible (TL) sur la section de route correspondant à l'au moins une valeur de congestion.

7. Procédé d'aide à la conduite (S100) pour la navigation d'un véhicule (VH) et comprenant :
la capture d'une pluralité d'images régionales (RM1~RM4) d'une pluralité de sections de route (RG1~RG4) d'une voie cible (TL) par une pluralité de dispositifs de capture d'images (110_1~110_4, 210_1~210_4), dans lequel la voie cible (TL) est une voie de sortie d'une autoroute ou d'une voie rapide ;
le calcul d'une pluralité de niveaux de congestion (MG1~MG4) correspondant aux sections de route (RG1~RG4) selon les images régionales (RM1~RM4) ; et
la fourniture d'un message de changement de voie (CMG) au véhicule (VH) selon les niveaux de congestion (MG1~MG4),
dans lequel un module de calcul de congestion (120, 220) comprend une pluralité de calculateurs (221_1~221_4), dans lequel chacun des calculateurs (221_1~221_4) est couplé à un dispositif de capture d'image correspondant parmi les dispositifs de capture d'image (110_1~110_4, 210_1~210_4), et
dans lequel l'étape de calcul des niveaux de congestion (MG1~MG4) correspondant aux sections de route (RG1~RG4) selon les images régionales (RM1~RM4) comprend :
la génération d'informations de flux optique correspondantes (OFM1~OFM4) selon une image régionale correspondante parmi les images régionales (RM1~RM4) par chacun des calculateurs (221_1~221_4), et le calcul d'un niveau de congestion correspondant selon l'image régionale correspondante et les informations de flux optique correspondantes (OFM1~OFM4), et
dans lequel l'étape de calcul du niveau de congestion correspondant selon l'image régionale correspondante et les informations de flux optique correspondantes (OFM1~OFM4) comprend :
la détermination du nombre de véhicules sur une section de route correspondante de la voie cible (TL) selon une texture de l'image régionale correspondante ;
la détermination d'une vitesse de circulation sur la section de route correspondante de la voie cible (TL) selon les informations de flux optique correspondantes (OFM1~OFM4) ; et
le calcul d'une valeur de congestion du niveau de congestion correspondant selon la complexité de la texture et un flux optique des informations de flux optique correspondantes (OFM1~OFM4) .

8. Procédé d'aide à la conduite (S100) selon la revendication 7, dans lequel l'étape de calcul des niveaux de congestion (MG1~MG4) correspondant aux sections de route (RG1~RG4) selon les images régionales (RM1~RM4) comprend :
la génération d'une pluralité d'informations de flux optique (OFM1~OFM4) correspondant aux images régionales (RM1~RM4) selon les images régionales (RM1~RM4) ; et
le calcul des niveaux de congestion (MG1~MG4) selon les images régionales (RM1~RM4) et les informations de flux optique (OFM1~OFM4) .

9. Procédé d'assistance à la conduite (S100) selon la revendication 7, dans lequel
la complexité de la texture est positivement corrélée au nombre de véhicules sur la section de route correspondante de la voie cible (TL), et
le flux optique est positivement corrélé à la vitesse de circulation sur la section de route correspondante de la voie cible (TL).

10. Procédé d'aide à la conduite (S100) selon la revendication 9, dans lequel plus la complexité de la texture est élevée et plus le flux optique est faible, plus la valeur de congestion est élevée.

11. Procédé d'aide à la conduite (S100) selon la revendication 7, dans lequel l'étape de fourniture du message de changement de voie (CMG) au véhicule (VH) selon les niveaux de congestion (MG1~MG4) comprend :
en réponse à au moins une valeur de congestion des valeurs de congestion inférieure à un seuil, la fourniture du message de changement de voie (CMG) pour informer le véhicule (VH) du passage à la voie cible (TL) sur la section de route correspondant à l'au moins une valeur de congestion.
